# EUROPÄISCHE PATENTSCHRIFT

(11) **EP 2 028 040 B1**
(45) Veröffentlichungstag und Bekanntmachung des Hinweises auf die Patenterteilung: **18.06.2014**
(21) Anmeldenummer: 08012751.7
(22) Anmeldetag: 15.07.2008
(51) Int. Cl.: B60N 2/42

(54) **Schutzsystem**
Protection system
Système de protection

(30) Priorität: 13.08.2007 CH 12822007
(43) Veröffentlichungstag der Anmeldung: 25.02.2009
(73) Patentinhaber: General Dynamics European Land Systems - Mowag GmbH, 8280 Kreuzlingen (CH)
(72) Erfinder: List, Hans-Jörg, 88048 Friedrichshafen (DE); Fehr, Uwe, 88045 Friedrichshafen (DE); Keller, Kai-Uwe, 8289 Kreuzlingen (CH); Bieniek, Michael, 8274 Tägerwilen (CH)
(74) Vertreter: Quehl, Horst Max

(56) Entgegenhaltungen:
- EP-A- 1 593 542
- DE-A1-102007 005 711
- DE-B3- 10 317 314
- US-A1- 2002 021 041
- US-A1- 2007 035 167
- US-H- H1 833

## Beschreibung

Die Erfindung betrifft ein Schutzsystem gegen eine fatale Auswirkung von Vertikalbeschleunigungen auf ein in einem Raum abstützend gehaltenes Objekt, insbesondere auf eine Person, wobei ein hierzu vorgesehener, eine Stützfläche für das Objekt aufweisender Stützkörper mittels einer Vertikalführung verschiebbar geführt und mit einem längenveränderlichen Dämpfungselement gekoppelt ist, das über eine Trageinrichtung mit einer Wand des Raumes verbunden ist, wobei der Stützkörper zusätzlich zu seiner Führung in der Vertikalführung in einer Querführung querbeweglich geführt ist.

Für Sitzeinrichtungen in gepanzerten Fahrzeugen und für Flugzeugschleudersitze ist es bekannt, den Sitz einschliesslich seiner Lehne an einer Trageinrichtung längsverschiebbar zu führen und diese Längsverschiebung bei Mineneinwirkung bzw. Betätigung des Schleudersitzes mittels eines längenveränderlichen Dämpfungselementes abzubremsen, um die auf die Wirbelsäule der den Sitz benutzenden Person wirkenden Beschleunigungskräfte auf ein nicht fatales Mass zu begrenzen. Aufgrund der durch den umgebenden Raum begrenzt möglichen Baulänge des Dämpfungselementes und der erforderlichen Begrenzung der auf die Person einwirkenden Beschleunigungskräfte reichen derartige Schutzsysteme z.B. gegenüber Minen mit grösserer Sprengkraft und/oder für kleinere Fahrzeuge nicht aus, mit entsprechend fatalen Folgen für die Fahrzeuginsassen. Ausserdem tritt bei den bekannten Schutzsystemen das sich in seiner Länge verändernde Dämpfungselement bereits in Funktion, bevor die Beschleunigungskräfte am zu schützenden Objekt bzw. an der Wirbelsäule einer Person ein gerade noch nicht kritisches Ausmass erreichen, da bereits die Massenträgheit des Stützkörpers ausreicht, um ein solches Dämpfungssystem zu aktivieren. Ein System dieser Art ist beispielsweise bekannt durch die US2002/0021041.

Der Erfindung liegt die Aufgabe zugrunde den genannten Nachteil zu vermeiden und somit ein Schutzsystem zu finden, das auch bei Vertikalbeschleunigungen eines gepanzerten Fahrzeuges wirksam ist, infolge derer bisher die Belastbarkeitsgrenze der Fahrzeuginsassen aufgrund des begrenzt zur Verfügung stehenden Dämpfungsweges überschritten wurde.

Die Lösung dieser Aufgabe erfolgt bei einem Schutzsystem der eingangs genannten Art erfindungsgemäss dadurch, dass die Vertikalführung und die Querführung mit vertikalem Abstand voneinander an der Trageinrichtung vorgesehen sind, so dass der Stützkörper bei Belastung durch Vertikalbeschleunigung des Raumes relativ zu diesem, sowohl eine Abwärts- als auch eine Kippbewegung ausführt, wobei die Trageinrichtung mit seiner Dachkonstruktion verbunden ist, so dass eine auf den Bodenbereich des Raumes einwirkende und zu seiner Dachkonstruktion weitergeleitete Vertikalbeschleunigung von dieser auf die Trageinrichtung übertragen wird.

Es versteht sich, dass in diesem Zusammenhang der Begriff "vertikal" nicht einschränkend im Sinne von lotrecht zu verstehen ist, sondern in Bezug auf den das Objekt einschliessenden Raum die Bedeutung "von oben nach unten" hat, ebenso wie eine Vertikalbeschleunigung aufgrund der Einwirkung einer Landmine z.B. auf ein bergaufwärts fahrendes Fahrzeug nicht als topographisch exakt vertikal anzusehen ist.

Vorteilhafte Ausführungsformen der Erfindung sind Gegenstand der abhängigen Patentansprüche und der folgenden Beschreibung anhand eines schematisch dargestellten Ausführungsbeispieles zu entnehmen. Es zeigt:
Fig.1 eine Seitenansicht eines Schutzsystems mit dem zu schützenden Objekt und einer Teildarstellung des zugehörigen Raumes in einer Ausgangsposition der Belastung und
Fig. 2 eine Darstellung entsprechend Fig.1 in einer Endposition der Belastung.

Schutzsysteme der erfindungsgemässen Art sind beispielsweise zu mehreren nebeneinander entlang einer Seitenwand 1 des Insassenraum 2 eines gegen die Einwirkung von Bodenminen gepanzerten Fahrzeuges vorgesehen. Jedes Schutzsystem für Insassen 3 hat mindestens eine sich parallel zur Seitenwand 1 erstreckende und an einer Dachkonstruktion 4 des Fahrzeuges, vorzugsweise über ein Gelenk 5 befestigte, langgestreckte Trageinrichtung 6, so dass die aus einem Sitzkörper 7 und einer Sitzlehne 8 bestehende und Sicherheitsgurte aufweisende Sitzeinrichtung 9 mit Abstand von Bodenbereich 10 des Fahrzeuges hängend befestigt ist. Ein zweites Gelenk 12 mit einer Seitenstütze 12' dient der zusätzlichen seitlichen Halterung der Trageinrichtung 6, so dass diese einer bei Mineneinwirkung erfolgenden Distanzänderung zwischen beiden Gelenken 5 und 11 bzw. zwischen der Bodenplatte 10 und der Dachkonstruktion 4 ohne Verformung folgen kann.

Diese Art der Befestigung hat im Vergleich zu am Fahrzeugboden abgestützten Schutzsystemen den wesentlichen Vorteil eines erheblichen Abbaus an Beschleunigungsenergie aufgrund einer vom Fahrzeugboden her einwirkenden Mine, indem diese sich auf dem Umweg über die Fahrzeugseitenwände 1 bis zur Dachkonstruktion 4 und damit zur Trageinrichtung 6 und schliesslich über ein Dämpfungselement 11 an den Fahrzeugsitz und den Fahrzeuginsassen 3 fortpflanzt.

Das Dämpfungselement 11 ist mit seinem unteren Ende über ein Gelenk 13 an einem unteren Bereich 14 der Trageinrichtung 6 befestigt, während sein oberes, in Richtung zu seinem unteren Ende dämpfend bewegbares Ende über ein Gelenk 15 mit einem die Sitzeinrichtung 9 tragenden Bügelkörper 16 verbunden ist.

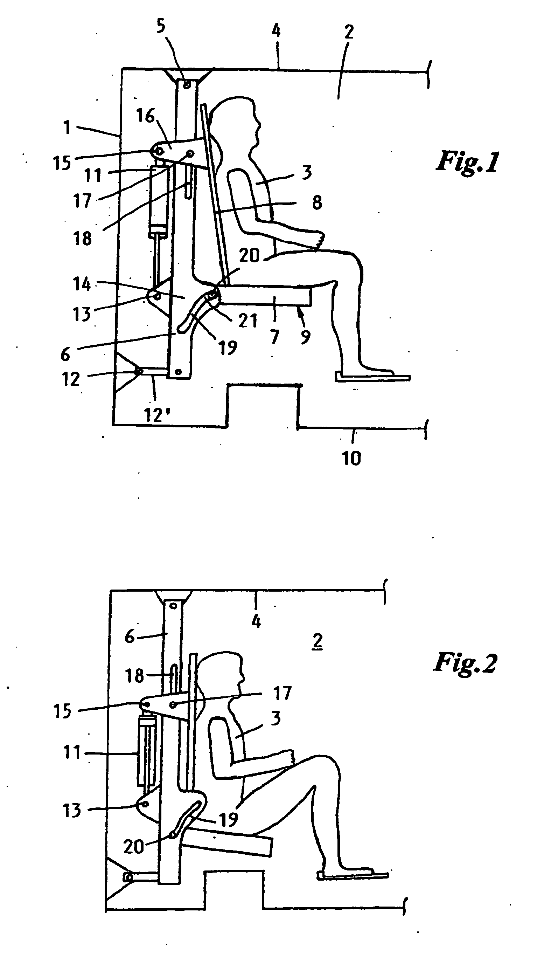

Um diese dämpfende Bewegung zu ermöglichen, ist für eine z.B. in einem Gleitstein gelagerte Achse 17 des Bügelkörpers 16 in der Trageinrichtung 6 als Vertikalführung 18 z.B. eine in deren Längsrichtung verlaufende Kulissenführung vorgesehen. Somit kann die Sitzeinrichtung 9 relativ zu der Trageinrichtung 6, ausgehend von der in Fig.1 dargestellten Position, bei schneller Aufwärtsbewegung des Insassenraumes 2 eine vertikal abwärts gerichtete, durch das Dämpfungselement 11 gebremste Ausweichbewegung ausführen.

Um diese durch das Dämpfungselement 11 gebremste relative Vertikalbewegung erst kurz vor Erreichen einer gerade noch durch die Insassen oder den betreffenden Insassen 3 verträglichen Belastung auszulösen, ist einerseits eine hierzu geeignete Charakteristik des Dämpfungselementes 11 vorgesehen und anderseits eine bestimmte Bahncharakteristik einer unteren, relativ zur Sitzeinrichtung 9 nach hinten weggerichteten Querführung 19 für eine untere, eine nach hinten gerichtete Sitzverschwenkung zulassende Sitzlagerung 20.

Entsprechend dem beispielhaft dargestellten Verlauf dieser Querführung 19 kann diese anfänglich, d.h. in ihrem oberen Bereich 21 relativ flach, anschliessend steil und am Ende wieder flach ausgeführt sein. Wesentlich ist hierbei jedoch, dass die Charakteristiken des Dämpferelementes 11 und der Querführung 19, unter Berücksichtigung der geometrischen Vorgaben des Sitzes, exakt aufeinander abgestimmt sein müssen, um eine maximale Verringerung des benötigten vertikalen Verfahrweges des Dämpferelementes 11 zu erzielen. Dadurch ergeben sich veränderliche Kraftkomponenten, die einerseits auf die Sitzeinrichtung 9 und den Insassen 3 und anderseits auf die Dämpfungseinrichtung 11 einwirken, so dass die Dämpfungseinrichtung 11 bei dem ihr konstruktiv zur Verfügung stehenden Dämpfungsweg grössere Vertikalbeschleunigungen des Fahrzeuges aufgrund der Explosion einer Bodenmine ausreichend abdämpfen kann, als ohne solche Kraftaufteilung möglich wäre.

Es versteht sich, dass die Einleitung einer zusätzlichen, nach hinten gerichteten Schwenk- und damit Ausweichbewegung auf die aus der Sitzeinrichtung 9 und dem Insassen 3 bestehende, durch das Dämpfungselement 11 abzubremsende Masse auch auf andere Weise als durch eine kulissenartige Führung mit einer Querführung 19 der dargestellten Art erfolgen kann, wie z.B. mittels eines Hebelsystems. Auch kann eine Querführung der abzubremsenden Masse anders angeordnet sein als dem dargestellten Ausführungsbeispiel entspricht, ebenso wie verschiedenartig ausgeführte oder auch zusätzliche, aufeinander abgestimmte Dämpfungselemente einsetzbar sind.

Ein Schutzsystem der beschriebenen Art ist in entsprechend angepasster Ausführungsform auch dazu geeignet für den Schutz von Objekten anderer Art zu dienen, so dass der Sitzkörper 7 allgemein als Stützkörper, z.B. zur Aufnahme von Objekten ausgeführt sein kann, auf die sich zu starke Beschleunigungen ebenfalls fatal auswirken können, wie z.B. auf explosives Material oder z.B. hochempfindliche Elektronik enthaltende Objekte.

## Patentansprüche

1. Schutzsystem gegen eine fatale Auswirkung von Vertikalbeschleunigungen auf ein in einem Raum (2) abstützend gehaltenes Objekt, insbesondere auf eine Person (3), wobei ein hierzu vorgesehener, eine Stützfläche für das Objekt (3) aufweisender Stützkörper (7) mittels einer Vertikalführung (18) verschiebbar geführt und mit einem längenveränderlichen Dämpfungselement (11) gekoppelt ist, das über eine Trageinrichtung (6) mit einer Wand (4) des Raumes (2) verbunden ist, wobei der Stützkörper (7), zusätzlich zu seiner Führung in der Vertikalführung (18), in einer Querführung (19) querbeweglich geführt ist, **dadurch gekennzeichnet, dass** die Vertikalführung (18) und die Querführung (19) mit vertikalem Abstand voneinander an der Trageinrichtung (6) vorgesehen sind, so dass der Stützkörper (7) bei Belastung durch Vertikalbeschleunigung des Raumes (2) relativ zu diesem, sowohl eine Abwärts- als auch eine Kippbewegung ausführt, wobei die Trageinrichtung (6) mit seiner Dachkonstruktion (4) verbunden ist, so dass eine auf den Bodenbereich (10) des Raumes (2) einwirkende und zu seiner Dachkonstruktion (4) weitergeleitete Vertikalbeschleunigung von dieser auf die Trageinrichtung (6) übertragen wird.

2. Schutzsystem nach Anspruch 1, **dadurch gekennzeichnet, dass** der Stützkörper als Sitzplattform (7) ausgebildet ist und mit einer Sitzlehne (8) verbunden ist, wobei die Sitzplattform (7) über die Sitzlehne (8) mit einem oberen, vertikal beweglichen Ende (15) des Dämpfungselementes (11) verbunden ist, während das andere Ende (13) des Dämpfungselementes (11) mit der Trageinrichtung (6) fest verbunden ist.

3. Schutzsystem nach Anspruch 2, **dadurch gekennzeichnet, dass** ein oberer Bereich der Sitzlehne (8) mit dem oberen, vertikal beweglichen Ende (15) des Dämpfungselementes (11) über einen Bügelkörper (16) verbunden ist, an dem ein Körper (17) befestigt ist, der in einer vertikal verlaufenden Führung (18) der Trageinrichtung (6) gleitet, wobei die Sitzplattform (7) zusätzlich über eine zur Vertikalen im spitzen Winkel verlaufende Schrägführung (19) mit der Trageinrichtung (6) verbunden ist, so dass bei nach oben gerichteter Vertikalbeschleunigung des Raumes (2) das Objekt (3) im Raum (2) eine gedämpfte, abwärts gerichtete und im unteren Bereich nach hinten kippende, relative Ausweichbewegung ausführt.

4. Schutzsystem nach Anspruch 3, **dadurch gekennzeichnet, dass** die Schrägführung (19) einen auf die Dämpfungscharakteristik des Dämpfungselementes (11) angepassten, zumindest abschnittsweise gekrümmten Verlauf aufweist.

5. Schutzsystem nach Anspruch 3, **dadurch gekennzeichnet, dass** die Schrägführung (19) einen flach s-förmigen Verlauf mit relativ flachem Anfangsverlauf aufweist.

6. Schutzsystem nach Anspruch 1, **dadurch gekennzeichnet, dass** das Dämpfungselement (11) eine Charakteristik aufweist, durch die seine Längenänderung und damit seine Dämpfungswirkung erst nach Erreichen einer Kraft ausgelöst wird, die zumindest angenähert der maximal verträglichen kompressiven Belastung der Wirbelsäule der zu schützenden Person oder der maximalen Belastung in der entsprechenden Beanspruchungsrichtung des zu schützenden Objektes entspricht.

## Claims

1. Protection system against a fatal effect of vertical accelerations towards an object that is held supportively in a space (2), in particular towards a person (3), wherein a protective body (7) provided for this purpose and having a support face for the object (3) is guided displaceably by means of a vertical guide (18) and is coupled with a length-adjustable damping element (11), which is connected to a wall (4) of the space (2) via a bearing device (6), wherein the protective body (7), in addition to being guided in the vertical guide (18), is guided with transverse motion in a transverse guide (19), **characterised in that** the vertical guide (18) and the transverse guide (19) are provided on the bearing device (6) with a vertical gap between them, such that the protective body (7) effects both a downwards and a tilting movement when subjected to vertical acceleration of the space (2) relative to this, wherein the bearing device (6) is connected to its roof construction (4), such that a vertical acceleration acting on the base region (10) of the space (2) and transferred to its roof construction (4) is transferred from this to the bearing device (6).

2. Protection system according to claim 1, **characterised in that** the protective body is designed as a seat platform (7) and is connected to a backrest (8), wherein the seat platform (7) is connected via the backrest (8) to an upper end (15) of the damping element (11) that can be moved vertically, while the other end (13) of the damping element (11) is connected fixedly to the bearing device (6).

3. Protection system according to claim 2, **characterised in that** an upper region of the backrest (8) is connected to the upper end (15) of the damping element (11) that can be moved vertically via a frame body (16) on which a body (17) is fastened, said body sliding in a vertically-running guide (18) of the bearing device (6), wherein the seat platform (7) is additionally connected to the bearing device (6) via an angular guide (19) running at an acute angle to the vertical, such that, in the case of the space (2) accelerating vertically upwards, the object (3) in the space (2) effects a dampened, downward, relative evasive movement that is tilted towards the rear in the lower region.

4. Protection system according to claim 3, **characterised in that** the angular guide (19) has a course that is adapted to the damping characteristics of the damping element (11) and is curved at least in sections.

5. Protection system according to claim 3, **characterised in that** the angular guide (19) has a flat, S-shaped course with a relatively flat starting course.

6. Protection system according to claim 1, **characterised in that** the damping element (11) has characteristics with which its length alteration and thus its damping effect is only triggered after a level of force has been reached which corresponds at least approximately to the maximum tolerated compressive load of the spinal column of the person to be protected or the maximum load in the corresponding direction of stress of the object to be protected.

## Revendications

1. Système de protection contre une répercussion fatale liée aux accélérations verticales sur un objet prenant appui dans une pièce (2), plus particulièrement sur une personne (3), un élément de soutien (7), qui comporte une surface de soutien prévue à cet effet pour l'objet (3), étant déplacé au moyen d'une commande verticale (18) et étant couplé à un élément d'amortissement (11) de longueur variable, lequel est relié à une cloison (4) de la pièce (2) au moyen d'un dispositif de support (6), l'élément de soutien (7), en plus de la commande verticale (18), étant guidé transversalement dans une commande transversale (19), **caractérisé en ce que** la commande verticale (18) et la commande transversale (19) sont éloignées verticalement l'une de l'autre au niveau d'un dispositif de support (6), de sorte que l'élément de soutien (7) effectue un mouvement vers le bas et un mouvement de basculement lors de la sollicitation entraînée par l'accélération verticale de la pièce (2) par rapport à lui, le dispositif de support (6) étant relié à sa structure de toit (4), de sorte qu'il applique une accélération verticale agissant sur la partie inférieure (10) de la pièce (2) et transmise de la structure de toit (4) à ce dispositif de support (6).

2. Système de protection selon la revendication 1, **caractérisé en ce que** l'élément de soutien est conçu comme plate-forme destinée à s'asseoir (7) et est reliée à un dossier de siège (8), la plate-forme destinée à s'asseoir (7) étant reliée via le dossier de siège (8) à une extrémité (15) supérieure mobile verticalement de l'élément d'amortissement (11), alors que l'autre extrémité (13) de l'élément d'amortissement (11) est fixée au dispositif de support (6).

3. Système de protection selon la revendication 2, **caractérisé en ce qu'**une partie supérieure du dossier de siège (8) est reliée à l'extrémité (15) supérieure mobile verticalement de l'élément d'amortissement (11) via un corps en étrier (16), auquel un corps (17) est fixé, lequel glisse dans une commande verticale (18) du dispositif de support (6), la plate-forme destinée à s'asseoir (7) étant également reliée au dispositif de support (6) par une commande inclinée (19) se déplaçant verticalement sur un angle aigu, de sorte que l'objet (3) situé dans la pièce (2) exécute un mouvement d'écartement relatif amorti orienté vers le bas et basculant vers l'arrière dans la partie inférieure lorsque la pièce (2) subit une accélération verticale orientée vers le haut.

4. Système de protection selon la revendication 3, **caractérisé en ce que** la commande inclinée (19) présente au moins un tracé courbé par section adapté à la caractéristique d'amortissement de l'élément d'amortissement (11).

5. Système de protection selon la revendication 3, **caractérisé en ce que** la commande inclinée (19) présente un tracé plat en forme de S avec un tracé initial relativement plat.

6. Système de protection selon la revendication 1, **caractérisé en ce que** l'élément d'amortissement (11) présente une caractéristique par laquelle la modification de la longueur et donc l'effet d'amortissement est d'abord déclenchée lorsqu'une force est atteinte, laquelle correspond au moins approximativement à la sollicitation de compression compatible maximale de la colonne vertébrale de la personne à protéger ou à la sollicitation maximale dans le sens des contraintes correspondant de l'objet à protéger.
